# EUROPÄISCHE PATENTSCHRIFT

(11) **EP 3 772 603 B1**
(45) Veröffentlichungstag und Bekanntmachung des Hinweises auf die Patenterteilung: **25.12.2024**
(21) Anmeldenummer: 20000265.7
(22) Anmeldetag: 23.07.2020
(51) Int. Cl.: F16F 1/02, F16F 9/32

(54) **KOLBENSICHERUNGSRING**
PISTON SECURING RING
ANNEAU DE BLOCAGE DU PISTON

(30) Priorität: 05.08.2019 DE 202019003249 U
(43) Veröffentlichungstag der Anmeldung: 10.02.2021
(73) Patentinhaber: Bümach Engineering International B.V., 7826 TA Emmen (NL)
(72) Erfinder: Bueter, Josef, 49733 Haren/Altenberge (DE)
(74) Vertreter: Weihrauch, Frank

(56) Entgegenhaltungen:
- DE-U1- 202012 008 997
- DE-U1- 202012 008 999

## Beschreibung

Aus dem Stand der Technik sind Kolbensicherungsringe zur Sicherung des Kolbens gegen die Kolbenstange als solche bekannt. Bekannt sind hierbei insbesondere federnd ausgebildete O-Ringe oder Ringe mit rechteckigem Querschnitt, welche durch ihre Federspannung entweder nach außen oder umgekehrt in konzentrischer Richtung federn. Das Dokument DE 20 2012 008999 U1, welches als der nächstliegende Stand der Technik angesehen wird, offenbart einen Kolbensicherungsring einer Kolbeneinheit, aufweisend einen abgeflachten radialen Querschnitt, wobei der abgeflachte radiale Querschnitt eine Querschnittslängsachse und eine Querschnittsquerachse aufweist, wobei sich der Querschnitt entlang der Querschnittlängsachse länger als entlang der Querschnittsquerachse erstreckt, wobei der Querschnitt entlang der Querschnittslängsachse gegenüberliegende ebene Begrenzungen aufweist, welche eine erste und eine zweite Ringfläche ausbilden, wobei der Kolbensicherungsring elastisch federnd ausgebildet ist, wobei der Kolbensicherungsring ausgebildet ist, unter Einwirkung einer Kraft eine Spannungslage und ohne Einwirkung einer Kraft eine Entspannungslage einzunehmen, wobei in einer Entspannungslage die Querschnittslängsachse gegenüber einer Ringebene um einen Winkel α geneigt ist.

Die im Stand der Technik bekannten Kolbensicherungsringe haben den Nachteil, dass deren Einsetzposition entweder direkt radial zugänglich sein muss oder dass bei einem axialen Zugang ein vergleichsweise großer radialer Bauraum für eine überdeckte Montage vorgesehen werden muss.

Die Aufgabe der Erfindung ist es, einen Kolbensicherungsring für eine Kolbeneinheit aufzuzeigen, mit dem ein Kolben und eine Kolbenstange zu einer Kolbeneinheit koppelbar ist, welcher sich leicht montieren lässt, eine platzsparende Anordnung ermöglicht sowie eine hohe Festigkeit der Kopplung von Kolben und Kolbenstange ermöglicht.

Die Aufgabe wird durch die im Schutzanspruch 1 aufgeführten Merkmale gelöst. Bevorzugte Weiterbildungen ergeben sich aus den Unteransprüchen. Erfindungsgemäß weist der Kolbensicherungsring einen Ringspalt und einen abgeflachten radialen Querschnitt auf.

Der Ringspalt unterbricht radial den Kolbensicherungsring. Er ermöglicht eine federnde Aufweitung des Kolbensicherungsringes unter Verbreiterung des Ringspalts. Dies wird nachfolgend als radiale Aufweitung bezeichnet. Je nach Breite des Ringspalts kann der Kolbensicherungsring auch federnd zusammengedrückt werden, wobei sich die Breite des Ringspalts dann reduziert. Dies wird nachfolgend als radiale Stauchung bezeichnet. Vorzugsweise lässt sich der Kolbensicherungsring soweit zusammendrücken, bis sich die Breite des Ringspalts auf Null reduziert. Die Ausbildung eines Kolbensicherungsrings mit einem radialen Ringspalt ist als solches aus dem Stand der Technik bekannt.

Der Kolbensicherungsring weist ferner erfindungsgemäß einen abgeflachten radialen Querschnitt auf. Der abgeflachte radiale Querschnitt weist dabei eine Querschnittslängsachse und eine Querschnittsquerachse auf.

Die Querschnittslängsachse und die Querschnittsquerachse stehen orthogonal zueinander. Die beiden Achsen können in den abgeflachten radialen Querschnitt einbeschrieben werden. Erfindungsgemäß erstreckt sich der Querschnitt entlang der Querschnittlängsachse länger als entlang der Querschnittsquerachse.

Erfindungsgemäß weist der Querschnitt entlang der Querschnittslängsachse gegenüberliegende ebene Begrenzungen auf, welche eine erste und eine zweite Ringfläche ausbilden. Die Begrenzungen des Querschnitts sind im Wesentlichen parallel ausgebildet und gegenüber einer Hauptlängsachse geneigt. Dabei sind die Ringflächen jeweils auf einer Innenseite und auf einer Außenseite des Kolbensicherungsrings angeordnet. Die Ringflächen entsprechen im geometrischen Sinne vorzugsweise im Wesentlichen einer Kegelstumpfmantelfläche.

Der Kolbensicherungsring ist erfindungsgemäß elastisch federnd ausgebildet. Hierzu ist der Kolbensicherungsring aus einem flexiblen und belastbaren Material, vorzugsweise aus Federstahl, gefertigt. Der Kolbensicherungsring ist somit in der Lage, auf eine belastende Kraft durch eine elastische Verformung zu reagieren.

Der Kolbensicherungsring ist erfindungsgemäß ausgebildet, unter Einwirkung einer Kraft eine Spannungslage und ohne Einwirkung einer Kraft eine Entspannungslage einzunehmen.

In der Spannungslage wird der Kolbensicherungsring durch die einwirkende Kraft elastisch verformt und wird somit gespannt. Wirkt die Kraft nicht mehr, kehrt der Kolbensicherungsring in seine Entspannungslage zurück.

Erfindungsgemäß ist in einer Entspannungslage die Querschnittslängsachse gegenüber einer Ringebene um einen Winkel alpha geneigt.

Als Ringebene wird die Planebene verstanden, welche orthogonal zu der Hauptlängsachse des Kolbensicherungsrings angeordnet ist. Ferner wird als umlaufende Ringachse die kreisförmige Gesamtheit der Schnittpunkte der jeweiligen Querschnittsquerachse mit der Querschnittslängsachse in allen Querschnitten verstanden. Ringebene und umlaufende Ringachse sind zueinander parallel.

Der Winkel alpha liegt dabei vorzugsweise zwischen 20 und 70 Grad, besonders bevorzugt zwischen 45 und 60 Grad. Somit ergibt sich für den Kolbensicherungsring eine konische Form.

Erfindungsgemäß ist der Kolbensicherungsring durch eine Verformung mit Veränderung der Querschnittslängsachse um die umlaufende Ringachse zu einer Spannungslage spannbar, wobei in der Spannungslage die Querschnittslängsachse um einen Winkel beta geneigt ist und der Winkel beta größer als der Winkel alpha ist. Bei der Spannung des Kolbensicherungsringes mittels einer einwirkenden Kraft verformt sich der Kolbensicherungsring so, dass sich die Querschnittslängsachse zur Ringebene hin aufrichtet. Somit wird der Winkel zwischen Querschnittslängsache und Ringebene größer als in der Entspannungslage. Vorzugsweise beträgt die Differenz zwischen dem Winkel alpha und dem Winkel beta mehr als 20 Grad. Weiterhin vergrößert sich hierbei vorzugsweise der Innendurchmesser, während sich der Außendurchmesser verringert. Es ist aber auch möglich, dass sich die Verformung durch Verdrehung um die umlaufende Ringachse mit einer radialen Aufweitung oder radialen Stauchung überlagert. So ist es beispielsweise möglich, dass sich sowohl der Innendurchmesser als auch der Außendurchmesser in der Spannungslage verringern, wobei sich dann der Außendurchmesser stärker verringert als der Innendurchmesser. In jedem Fall verringert sich jedoch in der Spannungslage die Differenz zwischen dem Innendurchmesser und dem Außendurchmesser. Werden Innen- und Außendurchmesser auf die Ringebene oder auf eine Ebene parallel zur Ringebene projiziert, entsteht eine Projektionsfläche des Kolbensicherungsrings. Die Projektionsfläche kann auch als axiale Überdeckungsfläche bezeichnet werden.

Die axiale Überdeckungsfläche verringert sich in der Spannungslage.

Erfindungsgemäß weist die Kolbeneinheit einen Kolben und eine Kolbenstange auf. Die Kolbeneinheit selbst ist nicht Bestandteil des erfindungsgemäßen Kolbensicherungsrings.

Der Kolben und die Kolbenstange sind mittels des Kolbensicherungsringes gegen eine axiale Verschiebung festlegbar. Hierzu weisen Kolben und Kolbenstange jeweils eine umlaufende Ringnut auf. Beiden Nuten sind so ausgebildet, dass sie einen Ringnutenraum bilden, in welchen der Kolbensicherungsring eingesetzt werden kann.

Der Kolbensicherungsring ist so ausgebildet, dass er in der Spannungslage durch einen Spalt zwischen Kolben und Kolbenstange in den Ringraum eingeführt werden kann. Der Spalt kann dabei als besonderer Vorteil so schmal ausgebildet werden, dass der Kolbensicherungsring lediglich in der Spannungslage in den Spalt eingeführt werden kann und sich in den Ringnutenraum einsetzen lässt. Nach seiner Positionierung in dem Ringnutenraum kehrt der Kolbensicherungsring in die Entspannungslage zurück. Damit kann der Spalt schmaler ausgebildet werden, als es der Entspannungslage des Kolbensicherungsrings entspricht. Die in Entspannungslage größere Projektionsfläche könnte nicht in den Spalt einbeschrieben werden.

Nach dem Einsetzen des Kolbensicherungsringes kehrt dieser in der Ringnut in seine Entspannungslage zurück und blockiert von da an die axiale Bewegung zwischen Kolben und Kolbenstange.

Ein wichtiger Vorteil des Kolbensicherungsringes liegt darin, dass dieser durch geringe Spaltmaße zwischen Kolben und Kolbenstange eingeführt und in die Ringnut eingesetzt werden kann. Dabei kann vorteilhaft jeweils eine sehr einfache Ausbildung für den Kolbensicherungsring sowie für den Kolben und die Kolbenstange mit lediglich zwei korrespondierenden Ringnuten verwendet werden, welche sich kostengünstig produzieren lassen.

Ein weiterer Vorteil liegt darin, dass der Kolbensicherungsring gegenüber der elastischen Verformung durch Verdrehung um die umlaufende Ringsachse bei gleicher Dimensionierung höhere Kräfte entgegensetzen kann, als beispielsweise bei einer bloßen radialen Aufweitung oder radialen Stauchung.

Gemäß einer vorteilhaften Weiterbildung weist der Kolbensicherungsring in der Entspannungslage einen größeren Außendurchmesser als in der Spannungslage auf.

Durch die Vergrößerung des Außendurchmessers in der Entspannungslage wird die formschlüssige Kopplung zwischen Kolben und Kolbenstange verbessert. Insbesondere kann der Kolbensicherungsring so in den Ringraum einer Hinterschneidung eintreten.

Gemäß einer vorteilhaften Weiterbildung ist der Querschnitt rechteckig ausgebildet. Durch einen rechteckigen Querschnitt ist die Verkleinerung der axialen Überdeckungsfläche bei einem Wechsel in die Spannungslage sehr wirksam umsetzbar. Durch eine Variation der Größe der Ringflächen sowie der Federkonstante ist die Sperrwirkung in der Ringnut nach dem Entspannen des Kolbensicherungsringes einstellbar.

Der Querschnitt ist gemäß einer vorteilhaften Weiterbildung zumindest an einer ersten Übergangskontur, welche einen Innendurchmesser ausbildet, und an einer zweiten Übergangskontur, welche den Außendurchmesser ausbildet, abgerundet. Eine Abrundung der wesentlichen Konturen vereinfacht das Einsetzen des Kolbensicherungsringes weiter, da der Ring ohne Verkantung in die Ringnut gleiten kann und Beschädigungen vermieden werden können.

Die beiden Übergangskonturen dienen hierbei auch zur Festlegung der Innen- und Außendurchmesser.

Die Erfindung wird als Ausführungsbeispiel anhand von
- Fig. 1: Drauf- und Schnittansicht des Kolbensicherungsrings (schematisch)
- Fig. 2: Funktionsschema zur Entspannungslage und Spannungslage des Kolbensicherungsringes
- Fig. 3: Kolbeneinheit mit eingesetztem Kolbensicherungsring (schematisch)
- Fig. 4: Kolbensicherungsring (isometrisch)
- Fig. 5: Kolbensicherungsring in Entspannungslage und Spannungslage als Vergleich (isometrisch)
- Fig. 6: Kolbeneinheit mit eingesetztem Kolbensicherungsring (Schnittdarstellung)
näher erläutert.

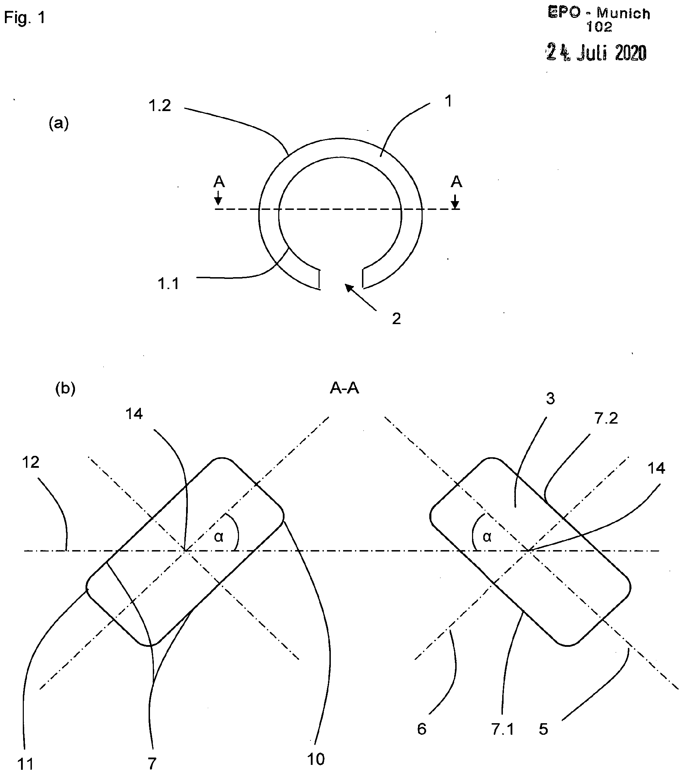

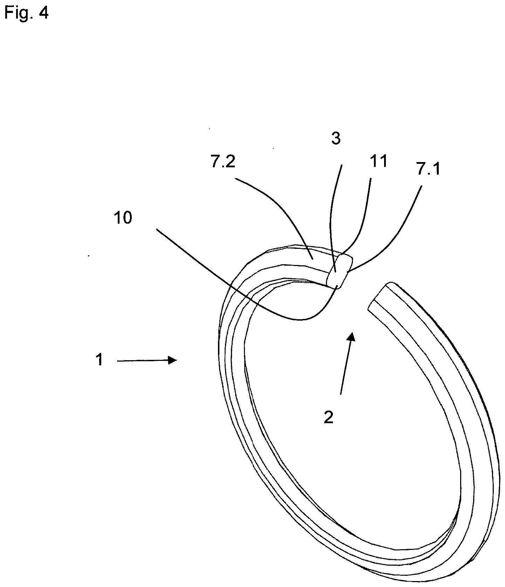

Die Figuren 1 bis 3 zeigen schematische Darstellungen und die Figuren 4 bis 6 isometrische Zeichnungen sowie eine Schnittzeichnung.

Fig. 1 (a) zeigt eine Draufsicht des Kolbensicherungsrings 1. Hierbei weist der Kolbensicherungsring 1 einen Ringspalt 2 auf.

In Fig. 1 (b) ist eine Schnittansicht entlang der Schnittebene (A-A) des Kolbensicherungsringes dargestellt. Diese Ansicht zeigt den abgeflachten radialen Querschnitt 3 des Kolbensicherungsrings 1 in einer Vergrößerung. In diesen Querschnitt 3 sind die Querschnittslängsachse 5 und die Querschnittsquerachse 6 einbeschrieben. Durch deren Schnittpunkte verläuft die Ringebene 12. Der Innendurchmesser 1.1 wird hier durch die erste Übergangskontur 10 gebildet. Der Außendurchmesser 1.2 wird durch die zweite Übergangskontur 11 definiert. Die beiden Übergangskonturen 10, 11 sind in dieser Ausführung abgerundet.

Die beiden Begrenzungen 7 parallel zu der Querschnittsängsachse 5 bilden die beiden Ringflächen, welche als erste Ringfläche 7.1 die Innenseite und als zweite Ringfläche 7.2 die Außenseite des Kolbensicherungsrings 1 darstellen.

Zwischen der Querschnittslängsachse 5 und der Ringebene 12 wird der Winkel α eingeschlossen. Der Scheitelpunkt des einbeschriebenen Winkel α, der in Fig. 1 (b) zugleich der Schnittpunkt der zwischen der Querschnittslängsachse 5 und der Querschnittsquerachse 6 ist, bildet gleichzeitig bei einer Projektion entlang des Kolbensicherungsrings 1 die umlaufende Ringachse 14.

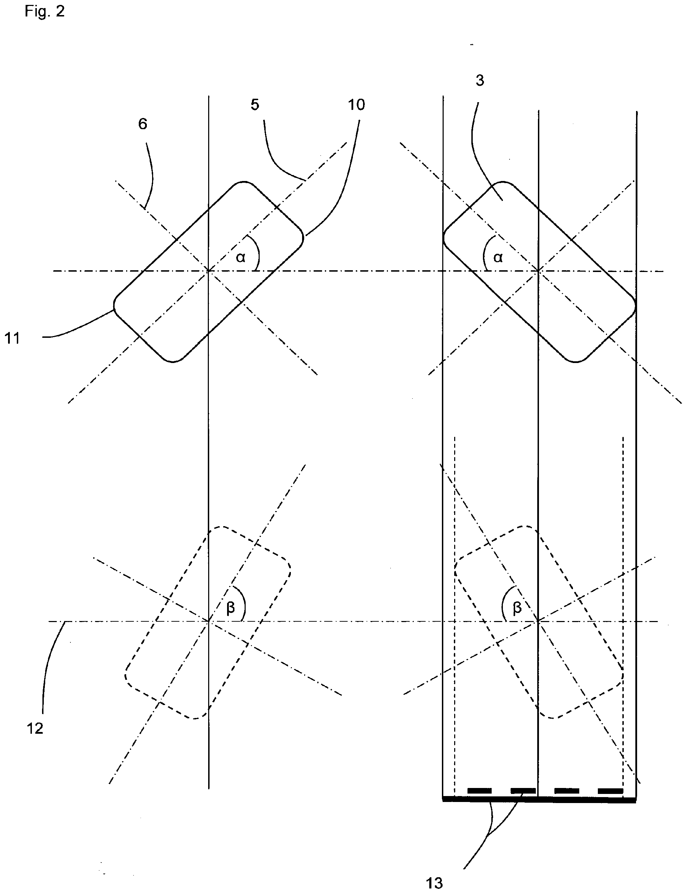

In Fig. 2 ist ein Funktionsschema des gespannten Kolbensicherungsrings 1 dargestellt. Dabei ist oben die Entspannungslage und unten die Spannungslage (gestrichelt) dargestellt. Die Darstellung ist analog zu Fig. 1 (b).

In der Spannungslage vergrößert sich der Winkel zwischen Querschnittslängsache und Ringebene 12 und wird zur Verdeutlichung des Sachverhaltes als Winkel β bezeichnet.

Die axiale Überdeckungsfläche 13 wird von dem Innen- und dem Außendurchmesser des Kolbensicherungsrings 1 begrenzt, welche in Fig. 2 auf die Ringebene 12 projiziert ist. In dieser Darstellung wird die axiale Überdeckungsfläche 13 zur besseren Übersicht außerhalb der eigentlichen Ringebene 12 durch zwei lotrechte Hilfslinien an der ersten Übergangskontur 10 und zweiten Übergangskontur 11 dargestellt.

Durch die Vergrößerung des Winkels wird die axiale Überdeckungsfläche 13 in der Spannungslage verkleinert. Die axiale Überdeckungsfläche 13 ist in der Spannungslage ist als gestrichelte Linie und in der Entspannungslage als durchgehende Linie dargestellt.

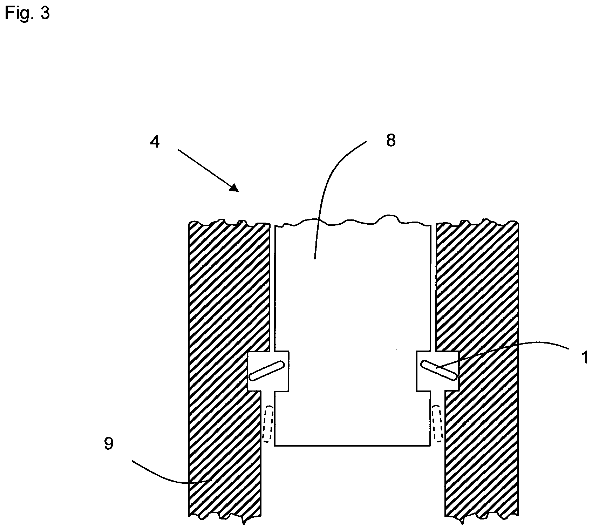

Fig. 3 zeigt die Kolbeneinheit 4 mit eingesetztem Kolbensicherungsring 1 im Teilschnitt in einer schematischen Darstellung.

Der Kolbensicherungsring wird in seiner Spannungslage in die, von sich gegenüberliegenden Nuten des Kolbens 8 und der Kolbenstange 9 gebildete, Ringnut eingeschoben. Dabei ermöglicht der Ringspalt 2 im Kolbensicherungsring ein Aufsetzen auf die Kolbenstange 8. Auch hier ist die Spannungslage gestrichelt dargestellt.

In der Ringnut entspannt sich der Kolbensicherungsring 1 und blockiert die Verschiebbarkeit zwischen Kolben 9 und Kolbenstange 8 durch den herbeigeführten axialen Formschluss.

Fig. 4 zeigt den Kolbensicherungsring 1 in einer isometrischen Ansicht. Sie zeigt die räumliche Ausbildung. Hier sind insbesondere die geneigte Querschnittsfläche des abgeflachten radialen Querschnitts 3, der Ringspalt 2 und der Körper des Kolbensicherungsrings 1 dargestellt.

Ebenso sind die erste Ringfläche 7.1, die zweite Ringfläche 7.2 sowie die beiden Übergangskonturen 10, 11 zu sehen, welche den Innendurchmesser 1.1 und den Außendurchmesser 1.2 bilden.

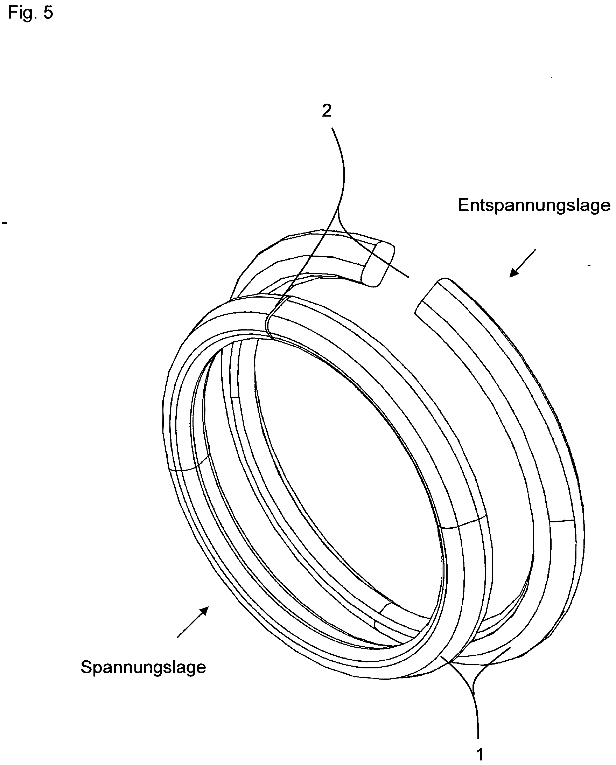

Fig. 5 zeigt den Kolbensicherungsring 1 in Entspannungslage und in Spannungslage in einer isometrischen Ansicht.

Die gespannte Form (links), also der Kolbensicherungsring 1 in Spannungslage, weist den Neigungswinkel β des abgeflachten radialen Querschnitts 3, einen durch die Spannung geschlossenen Ringspalt 2 und veränderte Durchmesser 1.1, 1.2 im Vergleich mit der entspannten Form (rechts) auf. Die entspannte Form (rechts), also der Kolbensicherungsring 1 in Entspannungslage, weist dabei den geringeren Neigungswinkel α auf.

Diese isometrische Darstellung veranschaulicht die in Fig. 2 aufgezeigte federnde Verformung zusätzlich.

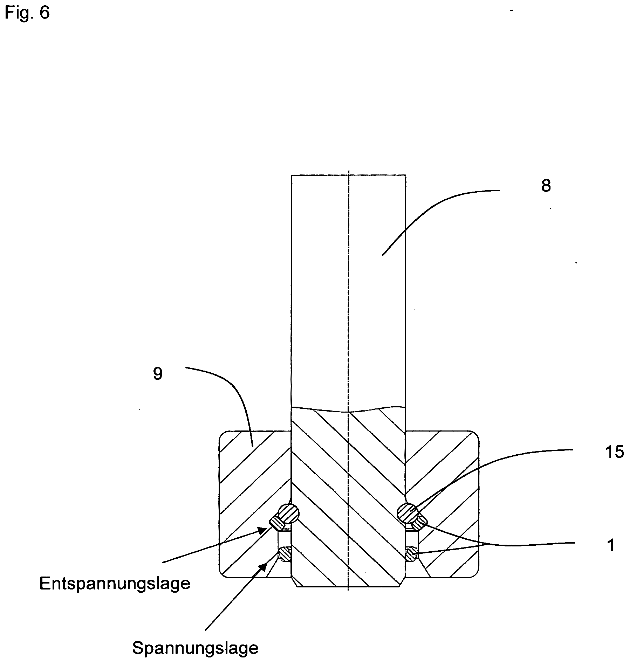

Fig. 6 zeigt die Kolbeneinheit mit eingesetztem Kolbensicherungsring 1 in einer Schnittzeichnung. Fig. 6 ergänzt das Funktionsschema gemäß Fig. 3.

Auch in Fig. 6 ist der Kolbensicherungsring 1 sowohl gespannt, also in Spannungslage, und ungespannt, also in Entspannungslage, dargestellt.

Der Kolbensicherungsring 1 in Spannungslage stellt die Position und die Verformung in dem Montagevorgang dar. Hierfür wird der Kolbensicherungsring 1 in den umlaufenden Zwischenraum zwischen Kolben 9 und Kolbenstange 8 geschoben, wobei er sich unter Krafteinwirkung entsprechend elastisch verformt und damit spannt. Erst beim Erreichen der Ringnut kann er seine Entspannungslage einnehmen, indem er sich elastisch rückverformt. Der entspannte Kolbensicherungsring 1 weist den geringeren Neigungswinkel α auf und sichert in der Kolbeneinheit 4 gemäß Fig. 6 einen Kopplungsring 15, welcher nicht Teil der Erfindung ist, in seiner Position in einer Ringnut in der Kolbeneinheit 4.

### Verwendete Bezugszeichen

- 1: Kolbensicherungsring
- 1.1: Innendurchmesser
- 1.2: Außendurchmesser
- 2: Ringspalt
- 3: abgeflachter radialer Querschnitt
- 4: Kolbeneinheit
- 5: Querschnittslängsachse
- 6: Querschnittsquerachse
- 7: Begrenzungen
- 7.1: erste Ringfläche
- 7.2: zweite Ringfläche
- 8: Kolbenstange
- 9: Kolben
- 10: erste Übergangskontur
- 11: zweite Übergangskontur
- 12: Ringebene
- 13: axiale Überdeckungsfläche
- 14: umlaufende Ringachse
- 15: Kopplungsring
- α: Winkel alpha
- β: Winkel beta

## Patentansprüche

1. Kolbensicherungsring (1) einer Kolbeneinheit (4),
aufweisend einen Ringspalt (2), einen abgeflachten radialen Querschnitt (3),
wobei der abgeflachte radiale Querschnitt (3) eine Querschnittslängsachse (5) und eine Querschnittsquerachse (6) aufweist,
wobei sich der Querschnitt (3) entlang der Querschnittlängsachse (5) länger als entlang der Querschnittsquerachse (6) erstreckt,
wobei der Querschnitt (3) entlang der Querschnittslängsachse (5) gegenüberliegende ebene Begrenzungen (7) aufweist, welche eine erste und eine zweite Ringfläche ausbilden (7.1; 7.2),
wobei der Kolbensicherungsring (1) elastisch federnd ausgebildet ist, wobei der Kolbensicherungsring (1) ausgebildet ist, unter Einwirkung einer Kraft eine Spannungslage und ohne Einwirkung einer Kraft eine Entspannungslage einzunehmen,
wobei in einer Entspannungslage die Querschnittslängsachse (5) gegenüber einer Ringebene (12) um einen Winkel α geneigt ist,
wobei der Kolbensicherungsring (1) mittels einer Veränderung der Querschnittslängsachse (5) um eine umlaufende Ringachse zu einer Spannungslage spannbar ist, wobei in der Spannungslage die Querschnittslängsachse (5) um einen Winkel β geneigt ist und wobei der Winkel β größer als der Winkel α ist,
wobei die Kolbeneinheit (4) eine Kolbenstange (8) und einen Kolben (9) aufweist, welche mittels des Kolbensicherungsrings (1) gekoppelt werden.

2. Kolbensicherungsring einer Kolbeneinheit nach Anspruch 1,
**dadurch gekennzeichnet,**
**dass** dieser in der Entspannungslage einen größeren Außendurchmesser als in der Spannungslage aufweist.

3. Kolbensicherungsring einer Kolbeneinheit nach Anspruch 1 und 2,
**dadurch gekennzeichnet,**
**dass** der Querschnitt (3) rechteckförmig ausgebildet ist.

4. Kolbensicherungsring einer Kolbeneinheit nach einem der vorhergehenden Ansprüche,
**dadurch gekennzeichnet,**
**dass** der Querschnitt (3) zumindest an einer ersten Übergangskontur (10), welche einen Innendurchmesser ausbildet, und an einer zweiten Übergangskontur (11), welche den Außendurchmesser ausbildet, abgerundet ist.

## Claims

1. A piston retaining ring (1) of a piston unit (4),
comprising an annular gap (2), a flattened radial cross-section (3),
wherein the flattened radial cross-section (3) has a cross-sectional longitudinal axis (5) and a cross-sectional transverse axis (6),
wherein the cross-section (3) extends more longitudinally along the cross-sectional longitudinal axis (5) than along the cross-sectional transverse axis (6),
wherein the cross-section (3) along the cross-sectional longitudinal axis (5) has opposing even boundaries (7), which form a first and a second ring surface (7.1; 7.2),
wherein the piston retaining ring (1) is designed as an elastically resilient element,
wherein the piston retaining ring (1) is designed to assume a tensioned position under the action of a force and a relaxed position without the action of a force,
wherein in a relaxed position, the cross-sectional longitudinal axis (5) is inclined at an angle α with respect to a ring plane (12),
wherein the piston retaining ring (1) can be tensioned by means of a change in the cross-sectional longitudinal axis (5) round a circumferential ring axis to a tensioned position, wherein in the tensioned position the cross-sectional longitudinal axis (5) is inclined by an angle β and wherein the angle β is greater than the angle α,
wherein the piston unit (4) comprises a piston rod (8) and a piston (9) which are coupled one to the other by means of the piston retaining ring (1).

2. The piston retaining ring (1) of a piston unit according to claim 1,
**characterized in that**
it has a larger external diameter in the relaxed position than in the tensioned position.

3. The piston retaining ring of a piston unit according to claims 1 and 2,
**characterized in**
**that** the cross section (3) has a rectangular design.

4. The piston retaining ring of a piston unit according to one of the preceding claims,
**characterized in that**
the cross-section (3) is rounded at least at a first transition contour (10),
which forms an internal diameter, and at a second transition contour (11), which forms the external diameter.

## Revendications

1. Bague de blocage du piston(1) d'une unité de piston (4),
comprenant un interstice annulaire (2), une section radiale aplatie (3),
où la section radiale aplatie (3) présente un axe longitudinal de section transversale (5) et un axe transversal de section transversale (6),
où la section transversale (3) s'étend plus longuement le long de l'axe longitudinal (5) de la section transversale que le long de l'axe transversal (6) de la section transversale,
où la section transversale (3) présente, le long de l'axe longitudinal (5) de la section transversale, des limites planes opposées (7) qui forment une première et une deuxième surfaces annulaires (7.1, 7.2),
où la bague de blocage du piston (1) est conçu de manière élastique,
où la bague de blocage du piston (1) est conçu pour prendre une position de tension sous l'effet d'une force et une position de détente sans l'effet d'une force,
où l'axe longitudinal de la section transversale (5) est incliné d'un angle α par rapport à un plan annulaire (12) dans une position de détente,
où la bague de blocage du piston (1) peut être serrée en une position de tension au moyen d'une modification de l'axe longitudinal de section transversale (5) autour d'un axe annulaire périphérique, où l'axe longitudinal de section transversale (5) est incliné d'un angle β dans la position de tension et où l'angle β est supérieur à l'angle α,
où l'unité de piston (4) comprend une tige de piston (8) et un piston (9) qui sont couplés au moyen de la bague de blocage du piston (1).

2. Bague de blocage du piston d'une unité de piston suivant la revendication 1 est **caractérisé en ce**
**que** celle-ci présente un diamètre extérieur plus grand dans la position de détente que dans la position de tension.

3. Bague de blocage du piston d'une unité de piston suivant la revendication 1 et 2
est **caractérisé en ce**
**que** la section transversale (3) est de forme rectangulaire.

4. Bague de blocage du piston d'une unité de piston suivant une des revendications précédentes
est **caractérisé en ce**
**que** la section transversale (3) est arrondie au moins sur un premier contour de transition (10), qui forme un diamètre intérieur, et sur un deuxième contour de transition (11), qui forme le diamètre extérieur.
